# EUROPEAN PATENT SPECIFICATION

(11) **EP 0 787 918 B1**
(45) Date of publication and mention of the grant of the patent: **09.04.2003**
(21) Application number: 97300329.6
(22) Date of filing: 20.01.1997
(51) Int. Cl.: F16C 39/06

(54) **Magnetic bearing apparatus with radial position correcting electromagnet**
Magnetlagergerät mit Elektromagnet zur radialer Positionskorrektur
Appareil à palier magnétique à électro-aimant de correction de la position radiale

(30) Priority: 31.01.1996 JP 3572596
(43) Date of publication of application: 06.08.1997
(73) Proprietor: Seiko Instruments Inc., Chiba-shi, Chiba (JP)
(72) Inventor: Maejima, Yasushi, c/o Seiko Seiki Kabushiki K., Narashino-shi, Chiba (JP)
(74) Representative: Sturt, Clifford Mark

(56) References cited:
- EP-A- 0 470 637
- GB-A- 2 130 655
- US-A- 4 128 795
- US-A- 5 256 952
- US-A- 5 355 042

## Description

This invention relates to a magnetic bearing apparatus, and particularly to a three axes control magnetic bearing apparatus.

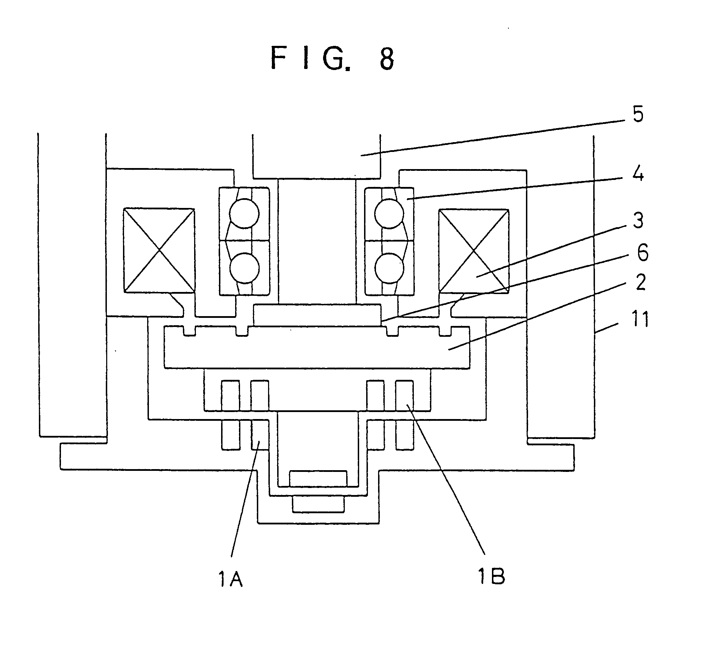

A turbo-molecular pump in which a conventional three axes control magnetic bearing apparatus has been applied will be described with referenced to Fig. 8.

Fig. 8 shows a vertical sectional view of a magnetic bearing part of a three axes control turbo-molecular pump. Lower side permanent magnets 1A are disposed in the lower end of a frame 11 of the turbo-molecular pump. Upper side permanent magnets 1B face the lower side permanent magnets 1A across a small gap. The lower side permanent magnets 1A and the upper side permanent magnets 1B are constituted with different poles so that they attract each other. The upper side permanent magnets 1B are fixed to the lower end face of a metal disc 2. A collar 6 is disposed on the upper end face of the metal disc 2, and a shaft 5 passes through the central part of the metal disc 2, the upper side permanent magnets 1B and the collar 6. Axial electromagnets 3 are constituted so that they support the metal disc 2 and the shaft 5 in mid-air. An auxiliary bearing 4 is provided to prevent damage caused by mechanical contact between the shaft 5 and the axial electromagnets 3 and so on occurring in cases of breakdown of the electromagnets.

During running, the magnetic bearing part supports the shaft 5 in mid-air by means of a balance of the force of the axial electromagnets 3 attracting the metal disc 2 and the attracting force between the lower side permanent magnets 1A and the upper side permanent magnets 1B.

However, in a conventional three axes control turbo-molecular pump, a phenomenon of vibration of the shaft 5 becoming large when the speed reaches the vicinity of the resonance point of rigid mode (hereinafter called the first resonance point) on starting has sometimes been produced.

In a three axes control turbo-molecular pump, vibration of the shaft 5 is usually controlled by the attraction force between the lower side permanent magnets 1A and the upper side permanent magnets 1B. However, because with the attraction force of permanent magnets the rigidity is weak, there has been a danger of it not being possible to stably absorb vibration occurring at the first resonance point. In this case, it sometimes happens that the shaft 5 and the auxiliary bearing 4 accelerate while still in contact with each other (hereinafter called the drag phenomenon). This phenomenon particularly readily occurs when, due to a cause such as that impurities have resided inside the turbo-molecular pump, the amount of unbalance of the shaft 5 has increased. When the shaft 5 and the auxiliary bearing 4 become continuously in contact with each other, the durability of the auxiliary bearing 4 falls. Also, the contact noise at this time is considerably large and the speed sometimes does not rise as far as the rated speed.

This invention was made in view of this kind of conventional problem, and has as an object providing a simplified magnetic bearing apparatus with a radial position correcting electromagnet which prevents a phenomenon of dragging on the auxiliary bearing 4 that tends to occur in the vicinity of the first resonance point on starting of a three axes control magnetic bearing apparatus.

US 5355042 discloses a rotating machine comprising a horizontal rotary shaft, an axial bearing and two radial magnetic bearings disposed opposite respective discs attached at different locations along the length of the shaft. The radial magnetic bearings each comprise three or more electromagnets disposed around the respective discs. The current passed through the coils of each of the electromagnets may be controlled in accordance with the radial position of the shaft. The subject-matter of claim 1 distinguishes from that prior art substantially in that permanent magnets are provided and in that the axial electromagnet and the single radial position correcting magnet act on the same disk.

The present invention provides a three axes control magnetic bearing apparatus having:
a first permanent magnet;
a second permanent magnet facing the first permanent magnet across a small gap;
a metal disc having the second permanent magnet fixed in one end face thereof and having a shaft passing through a central part thereof;
an axial electromagnet for attracting the metal disc and supporting the shaft in mid-air; and
an auxiliary bearing for preventing mechanical damage occurring in cases such as breakdown of the axial electromagnet, and
a single radial position correcting electromagnet for displacing the disc in a single direction, said radial position correcting electromagnet comprising a radial direction attracting electromagnet having a magnetic pole facing the circumferential edge of the metal disc across a small gap.

The apparatus may further comprise a means for impressing a voltage on the radial position correcting magnet as a function of the speed of the shaft, adapted to impress a voltage of short period on the radial direction attracting electromagnet so that on starting of the shaft of the three axes control magnetic bearing apparatus the metal disc is attracted each time the speed of the shaft passes through at least one pre-set speed in the vicinity of the resonance point of rigid mode.

Also, in the invention, it may be so constructed that the direction of attraction of the metal disc by the radial direction attracting electromagnet coincides with the direction of a magnetomotive force produced in the radial direction attracting electromagnet.

Further, in the invention, it may be so constructed that the direction of attraction of the metal disc by the radial direction attracting electromagnet is at right angles to the direction of a magnetomotive force produced in the radial direction attracting electromagnet.

Finally, in the invention, it may be so constructed that the first permanent magnet is disposed in one end face of a frame and the radial direction attracting electromagnet is fixed to the frame.

An apparatus embodying the invention will now be described, by way of example only, with reference to the accompanying diagrammatic figures, in which:
Fig. 1 is a vertical sectional view of the overall construction of the first embodiment.
Fig. 2 is an enlarged view of a magnetic bearing part of the first embodiment.
Fig. 3 is a sectional view on the arrow view line I-I in Fig. 2.
Fig. 4 is a sectional view on the arrow view line I-I in a case wherein a horseshoe-shaped electromagnet is used as a radial direction attracting electromagnet in the bearing of Fig. 2.
Fig. 5 is a vertical sectional view of the overall construction of a second embodiment.
Fig. 6 is an enlarged view of a magnetic bearing part of the second embodiment.
Fig. 7 is a sectional view on the arrow view line II-II in Fig. 6.
Fig. 8 is a vertical sectional view of a magnetic bearing part of a conventional three axes control turbo-molecular pump.

Embodiments of the invention will now be described with reference to the accompanying drawings. Elements the same as in Fig. 8 have been given the same symbols and their description is omitted below.

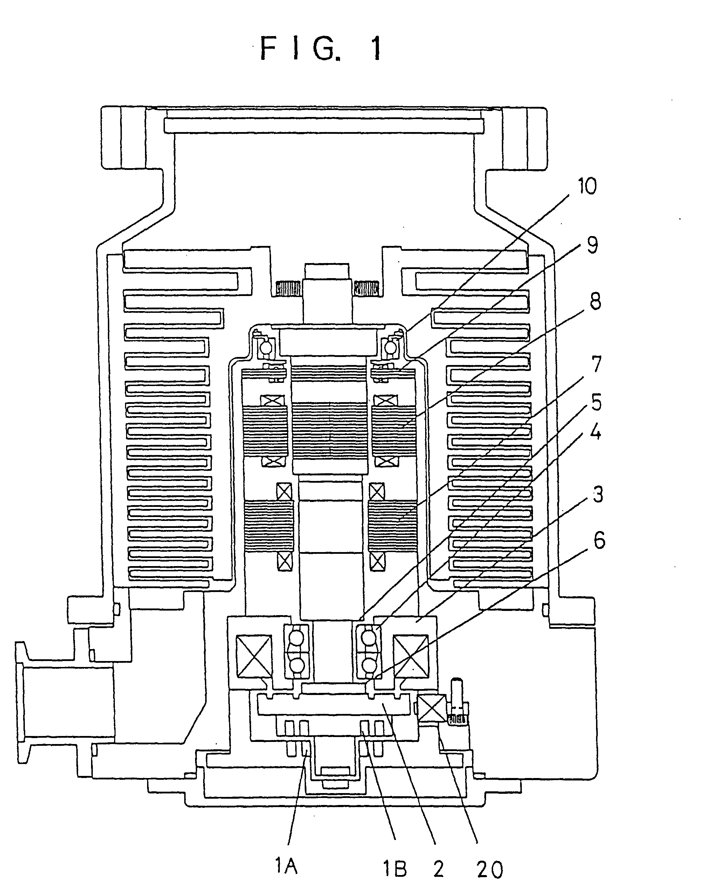

A first embodiment of the invention is shown in Fig. 1 through Fig. 4. In Fig. 1 a vertical sectional view of the overall construction of the first embodiment is shown. A drive motor 7 is made up of a rotor and a stator, and by being supplied with a power supply by a direct current power supply can rotate at high speed. A radial direction electromagnet 8 carries out adjustment of the radial position of the shaft 5 on the basis of a radial position detected by a radial sensor 9. An auxiliary bearing 10, like the auxiliary bearing 4, is provided to prevent damage caused by mechanical contact. A single radial direction attracting electromagnet 20 is disposed with a magnetic pole thereof facing the circumferential edge, that is one radial direction end, of the metal disc 2 across a small gap and is for attracting the metal disc 2, and can act as a radial direction position correcting electromagnet.

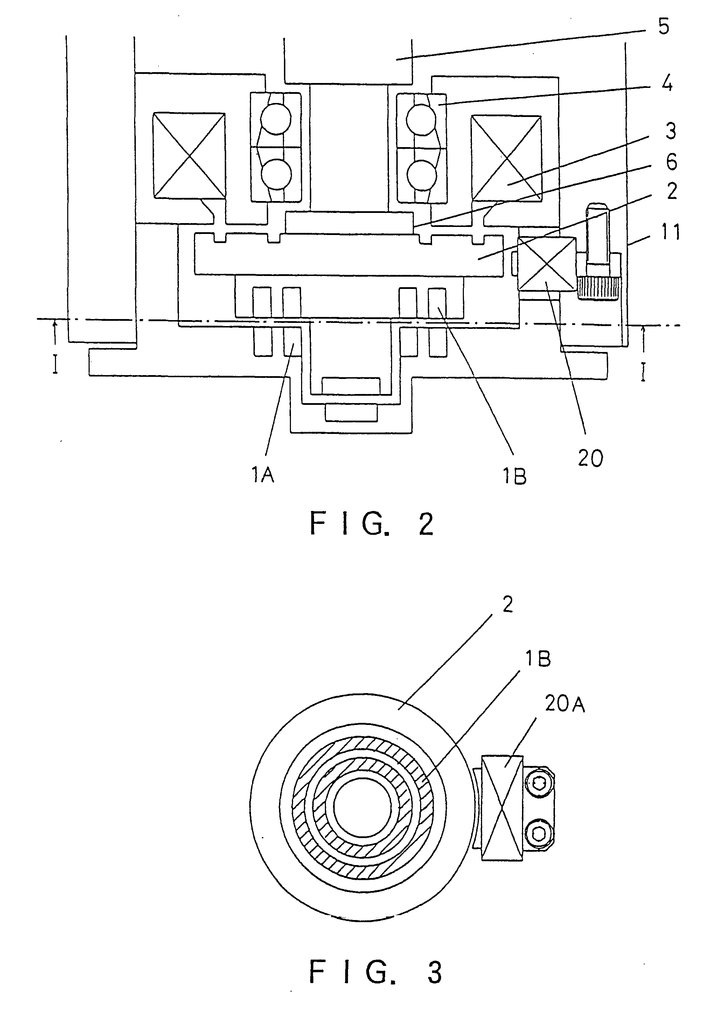

In Fig. 2 an enlarged view of the magnetic bearing part of the first embodiment is shown, and in Fig. 3 a sectional view on the arrow view line I-I is shown.

The operation thereof will now be described.

The radial direction attracting electromagnet 20 is provided to release drag when unbalance of the shaft 5 has occurred and the shaft 5 has become continuously in contact with the auxiliary bearing 4. For example, when a turbo-molecular pump whose rated speed is about 44,000rpm is used, the first resonance point exists in the vicinity of 5,000rpm, and it has been confirmed by experiment that to release drag it is good to impress a voltage of a short period (about 1 second or less) divided over a plurality of times on the radial direction attracting electromagnet 20 in the vicinity of the first resonance point (4,000 to 6,000rpm). Even if a voltage is applied similarly below 4,000rpm, the inertial force of the shaft 5 is not yet sufficient and the drag phenomenon tends to occur again. At over 6,000rpm, because the angluar momentum or inertial force (which acts with the square of the angular velocity) of the shaft 5 has become too large, an electromagnet having a large attracting force becomes necessary for release of the drag. Therefore, in this embodiment a voltage is impressed on the radial direction attracting electromagnet 20 once at each of the speeds of 4,000rpm, 5,000rpm and 6,000rpm. However, the set speeds and number of voltage impressions are based on experimental tentative proposals and are not limited to these values which relate to a single example. To make control simple and to be sure of certainty of protection, even if the drag is released at the 4,000rpm point, a voltage is still impressed on the radial direction attracting electromagnet 20 at the 5,000rpm and 6,000rpm points.

When a voltage is impressed on the radial direction attracting electromagnet 20, the metal disc 2 is attracted in the radial direction and the contact between the shaft 5 and the auxiliary bearing 4 is released, and thereafter vibration due to the shaft 5 is absorbed by the attraction force between the lower side permanent magnets 1A and the upper side permanent magnets 1B.

The speed of the turbo-molecular pump may be detected by providing a dedicated sensor, but because the speed is already being controlled by a controller (not shown), impressing of the voltage on the radial direction attracting electromagnet 20 at each speed can also be carried out by extracting the speed from this controller. In this case, a control circuit for controlling the radial direction attracting electromagnet 20 can be made just by changing some software and hardware of the existing controller.

Because the size of the first resonance point differs depending on the type and the material and so on of the turbo-molecular pump used, the optimum control (set speeds of voltage impression times, number of voltage impressions, impression time, capacity of electromagnet) for releasing the drag phenomenon differs case by case.

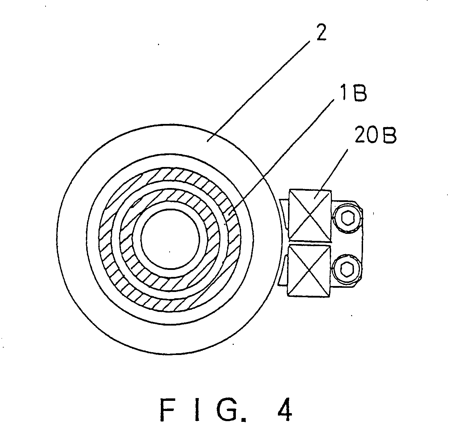

Fig. 3 shows a case wherein a radial attracting electromagnet 20A which is a bar-shaped electromagnet is used, and this has the merit that it is compact and lightweight. On the other hand, in Fig. 4, a case wherein a radial direction attracting electromagnet 20B which is a horseshoe-shaped electromagnet is used. With a horseshoe-shaped electromagnet, generally more than a bar-shaped electromagnet it is possible to obtain a stronger attraction force relative to its volume. Also, because there are magnetic pole faces facing the metal disc 2 in two places, attracting forces having a predetermined spacing act in two locations. The coils of the radial direction attracting electromagnet 20B are wound in mutually different directions.

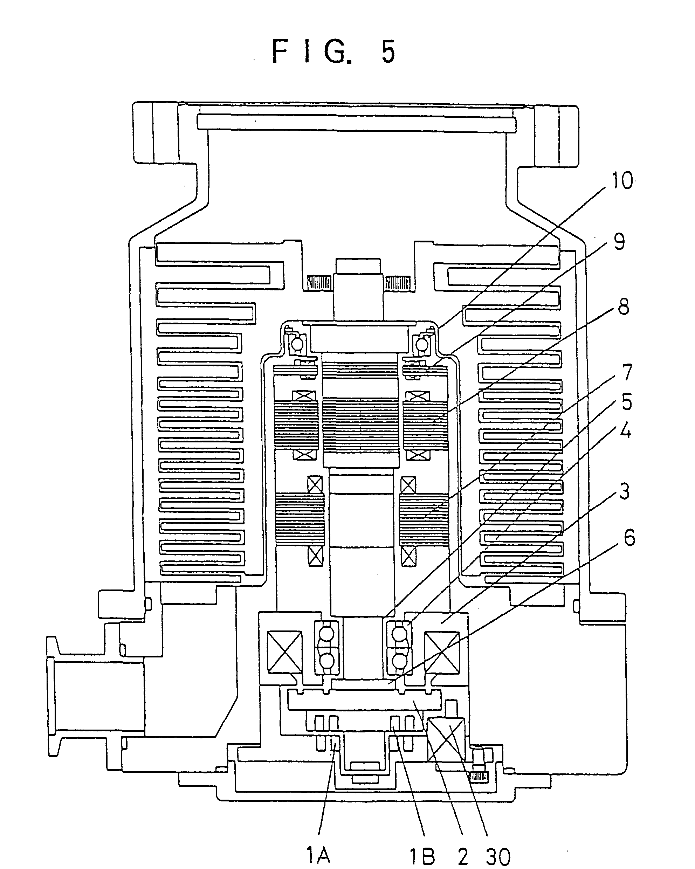

Next, a second embodiment of the invention is shown in Fig. 5 through Fig. 7. Parts of elements the same as in the first embodiment have been given the same symbols and their description is omitted below.

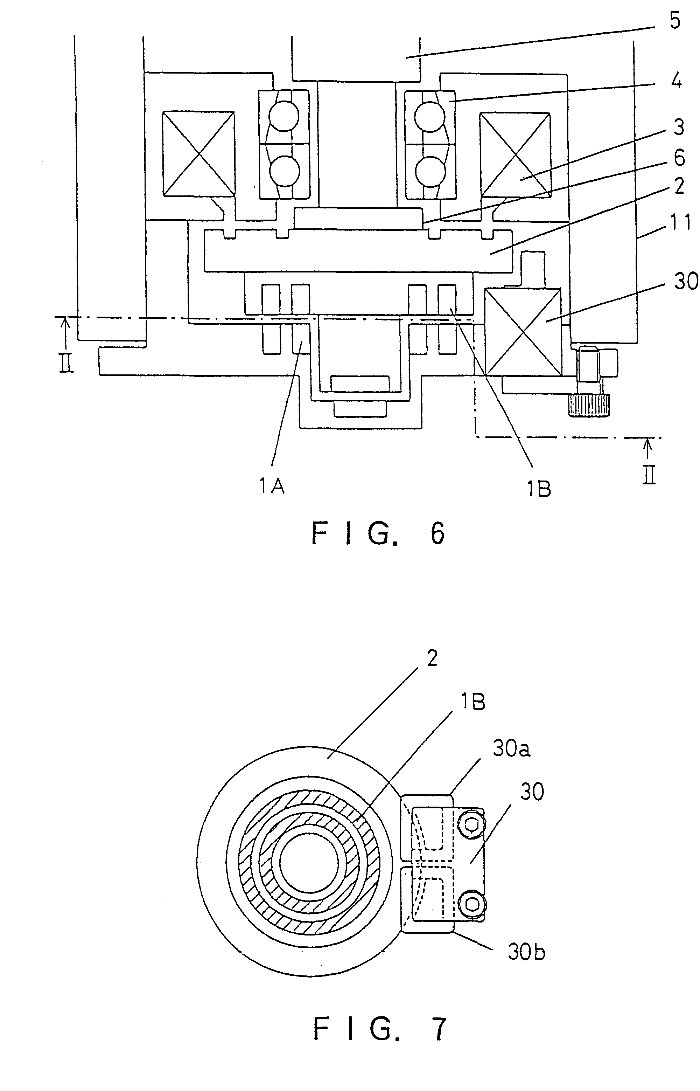

Fig. 5 shows a vertical sectional view of the overall construction of the second embodiment. Fig. 6 shows an enlarged view of the magnetic bearing part of the second embodiment, and Fig. 7 shows a sectional view on the arrow view line II-II.

A radial attracting electromagnet 30 is fixed in an L-shape to the lower end face of the frame 11 of the turbo-molecular pump. Coils 30a and 30b are wound in mutually different directions.

In the first embodiment, for the magnetic pole face the same face as the magnetomotive force direction was made with respect to the metal disc 2, but in the second embodiment a magnetic pole face at right angles to the magnetomotive force direction is made with respect to the metal disc 2. In this way, according to the type of the turbo-molecular pump, selecting a radial direction attracting electromagnet taking into consideration structural aspects and economy and so on becomes possible.

The polarity of the radial direction attracting electromagnet 20 or 30 with respect to the metal disc 2, since the object being attracted is the metal disc 2 and is preferably silicon steel, may be made with an N-pole or may be made with an S-pole.

As described above, according to this invention, because it was made a construction wherein a magnetic pole of a radial direction attracting electromagnet is provided across a small gap from the circumferential edge or one radial direction end of a metal disc and a short period voltage is impressed at every set speed in the vicinity of the first resonance point so that the metal disc is attracted, it is possible to prevent the shaft and the auxiliary bearing accelerating while still in contact. As a result, it is possible to increase the durability of the auxiliary bearing and it is possible to maintain the performance that the three axes control magnetic bearing apparatus originally has.

Also, according to this invention, selecting a radial direction attracting electromagnet taking into consideration structural aspects and economy and so on of a three axes control magnetic bearing apparatus becomes possible.

Although the permanent magnets 1A and 1B are referred to above as lower and upper permanent magnets respectively, it is not essential that they be arranged one above the other. The relative positions of the permanent magnets depend on the orientation of the bearing, which is not limited to the vertical orientation illustrated and may be any other orientation.

The aforegoing description has been given by way of example only and it will be appreciated by a person skilled in the art that modifications can be made without departing from the scope of the present invention.

## Claims

1. A three axes control magnetic bearing apparatus having:
a first permanent magnet (1A);
a second permanent magnet (1B) facing the first permanent magnet across a small gap;
a metal disc (2) having the second permanent magnet fixed in one end face thereof and having a shaft (5) passing through a central part thereof;
an axial electromagnet (3) for attracting the metal disc and supporting the shaft in mid-air; and
an auxiliary bearing (4) for preventing mechanical damage occurring in cases such as breakdown of the axial electromagnet, and
a single radial position correcting electromagnet for displacing the disc in a single direction, said radial position correcting electromagnet comprising a radial direction attracting electromagnet (20;30) having a magnetic pole facing the circumferential edge of the metal disc across a small gap.

2. A three axes control magnetic bearing apparatus according to claim 1, further comprising means for impressing a voltage on the radial position correcting magnet as a function of the speed of the shaft, wherein said means for impressing a voltage is adapted to impress a voltage of short period on the radial direction attracting electromagnet so that on starting of the shaft of the three axes control magnetic bearing apparatus the metal disc is attracted each time the speed of the shaft passes through at least one pre-set speed in the vicinity of the resonance point of rigid mode.

3. A magnetic bearing apparatus with radial position correcting electromagnet according to claim 1 or claim 2, wherein the direction of attraction of the metal disc by the radial direction attracting electromagnet (20) coincides with the direction of a magnetomotive force produced in the radial direction attracting electromagnet.

4. A magnetic bearing apparatus with radial position correcting electromagnet according to claim 1 or claim 2, wherein the direction of attraction of the metal disc by the radial direction attracting electromagnet (30) is at right angles to the direction of a magnetomotive force produced in the radial direction attracting electromagnet.

5. A magnetic bearing apparatus with radial position correcting electromagnet according to any preceding claim, wherein the first permanent magnet is disposed in one end face of a frame (11) and the radial direction attracting electromagnet is fixed to the frame.

## Patentansprüche

1. Dreiachsensteuerung-Magnetlagervorrichtung, mit:
einem ersten Permanentmagneten (1A);
einem zweiten Permanentmagneten (1B), der dem ersten Permanentmagneten über einen kleinen Spalt gegenüberliegt;
einer Metallscheibe (2), an deren einer Stirnfläche der zweite Permanentmagnet befestigt ist und die eine Welle (5) aufweist, die durch ihren Mittelabschnitt verläuft;
einen axialen Elektromagneten (3) zum Anziehen der Metallscheibe und zum freischwebenden Unterstützen der Welle;
ein Hilfslager (4) zum Verhindern einer mechanischen Beschädigung, die in Fällen wie z.B. dem Versagen des axialen Elektromagneten auftritt, und
einem einzelnen Radialpositionskorrektur-Elektromagneten zum Verschieben der Scheibe in einer einzigen Richtung, wobei der Radialpositionskorrektur-Elektromagnet einen Radialrlchtunganzlahungs-Elektromagneten (20; 30) umfaßt, der einen Magnetpol aufweist, der der Umfangskante der Metallscheibe über einen kleinen Spalt gegenüberliegt.

2. Dreiachsensteuerung-Magnetlagervorrichtung nach Anspruch 1, die ferner Mittel umfaßt, um dem Radialpositionskorrektur-Magnenten eine Spannung als Funktion der Drehzahl der Welle aufzuprägen, wobei die Mittel zum Aufprägen einer Spannung dafür ausgelegt sind, dem Radialrichtunganziehungs-Elektromagneten eine Spannung von kurzer Zeitdauer aufzuprägen, so daß beim Anlaufen der Welle der Dreiachsensteuerung-Magnetlagervorrichtung die Metallscheibe jedes Mal dann angezogen wird, wenn die Drehzahl der Welle wenigstens eine voreingestellte Drehzahl in der Umgebung des Resonanzpunktes des steifen Modus durchläuft.

3. Magnetlagervorrichtung mit Radialpositionskorrektur-Elektromagnet nach Anspruch 1 oder 2, wobei die Anziehungsrichtung der Metallscheibe durch den Radialrichtunganziehungs-Elektromagneten (20) mit der Richtung einer magnetomotorischen Kraft zusammenfällt, die im Radialrichtunganziehungs-Elektromagneten erzeugt wird.

4. Magnetlagervorrichtung mit Radialpositionskorrektur-Elektromagnet nach Anspruch 1 oder 2, wobei die Anziehungsrichtung der Metallscheibe durch den Radialrichtunganziehungs-Elektromagneten (30) rechtwinklig zur Richtung einer magnetomotorischen Kraft ist, die im Radialrichtunganziehungs-Elektromagneten erzeugt wird.

5. Magnetlagervorrichtung mit Radialpositionskorrektur-Elektromagneten nach irgendeinem der vorangehenden Ansprüche, wobei der erste Permanentmagnet in einer Stirnfläche eines Rahmens (11) angeordnet ist und der Radialrichtunganziehungs-Elektromagnet am Rahmen befestigt ist.

## Revendications

1. Appareil de contrôle à palier magnétique à trois axes possédant :
un premier aimant permanent (1A) ;
un deuxième aimant permanent (1B) face au premier aimant permanent dans un espace de petite taille ;
un disque métallique (2) possédant le deuxième aimant permanent fixé sur une face frontale dudit disque et possédant un arbre (5) passant dans une partie centrale dudit disque ;
un électroaimant axial (3) pour attirer le disque métallique et supporter l'arbre en l'air ; et
un palier auxiliaire (4) pour empêcher tout dommage mécanique survenant dans des cas tels qu'une panne de l'électroaimant axial ; et
un électroaimant unique de correction de position radiale pour déplacer le disque dans une direction unique, ledit électroaimant de correction de position radiale comprenant un électroaimant d'attraction en direction radiale (20 ; 30) possédant un pôle magnétique faisant face au bord circonférentiel du disque métallique dans un espace de petite taille.

2. Appareil de contrôle à palier magnétique à trois axes selon la revendication 1, comprenant en outre un moyen pour appliquer une tension sur l'aimant de correction de position radiale comme fonction de la vitesse de l'arbre, dans lequel ledit moyen pour appliquer une tension est adapté pour appliquer une tension de courte durée sur l'électroaimant d'attraction en direction radiale de telle sorte que, lors du démarrage de l'arbre sur l'appareil de contrôle à palier magnétique à trois axes, le disque métallique soit attiré à chaque fois que la vitesse de l'arbre dépasse au moins une vitesse pré-sélectionnée à proximité du point de résonance du mode rigide.

3. Appareil à palier magnétique avec électroaimant de correction de position radiale selon la revendication 1 ou la revendication 2, dans lequel la direction de l'attraction du disque métallique par l'électroaimant d'attraction en direction radiale (20) coïncide avec la direction d'une force magnétomotrice produite dans l'électroaimant d'attraction en direction radiale.

4. Appareil à palier magnétique avec électroaimant de correction de position radiale selon la revendication 1 ou la revendication 2, dans lequel la direction d'attraction du disque métallique par l'électroaimant d'attraction en direction radiale (30) se trouve à angle droit par rapport à la direction d'une force magnétomotrice produite dans l'électroaimant d'attraction en direction radiale.

5. Appareil à palier magnétique avec électroaimant de correction de position radiale selon l'une quelconque des revendications précédentes, dans lequel le premier aimant permanent est agencé sur une face d'extrémité d'une ossature (11) et dans lequel l'électroaimant d'attraction en direction radiale est fixé à l'ossature.
